(19) Europäisches Patentamt
European Patent Office
Office européen des brevets

(11) **EP 4 283 426 A1**

(12) **EUROPEAN PATENT APPLICATION**
published in accordance with Art. 153(4) EPC

(43) Date of publication:
**29.11.2023 Bulletin 2023/48**

(21) Application number: **21921177.8**

(22) Date of filing: **27.10.2021**

(51) International Patent Classification (IPC):
**G05B 23/02** (2006.01)   **G01M 99/00** (2011.01)

(52) Cooperative Patent Classification (CPC):
**G01M 99/00; G05B 23/02**

(86) International application number:
**PCT/JP2021/039607**

(87) International publication number:
**WO 2022/158074 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021 JP 2021009823**

(71) Applicant: **The Japan Steel Works, Ltd.**
**Tokyo 141-0032 (JP)**

(72) Inventors:
• **FUROKAWA, Mikio**
**Tokyo 141-0032 (JP)**
• **SUZUKI, Jun**
**Tokyo 141-0032 (JP)**
• **HIRANO, Takayuki**
**Tokyo 141-0032 (JP)**

(74) Representative: **Cabinet Beaumont**
**4, Place Robert Schuman**
**B.P. 1529**
**38025 Grenoble Cedex 1 (FR)**

(54) **ABNORMALITY DETECTION SYSTEM, MOLDING EQUIPMENT SYSTEM, ABNORMALITY DETECTION DEVICE, ABNORMALITY DETECTION METHOD, AND COMPUTER PROGRAM**

(57)   An abnormality detection system includes an abnormality detection apparatus that detects an abnormality of a production device, a control device that performs operation control of the manufacturing device and transmits operating data, a sensor that detects a physical quantity related to operation or a product of the manufacturing device and outputs sensor value data, and a diagnostic apparatus. The abnormality detection apparatus determines a presence or an absence of an abnormality of the manufacturing device based on the operating data transmitted from the control device and the sensor value data output from the sensor and transmits the determination result to the control device. The abnormality detection apparatus further transmits the operating data and the sensor value data to the diagnostic apparatus. The diagnostic apparatus diagnoses the condition of the manufacturing device based on sensor value data accumulated in the past in the database and the received data and transmits the diagnostic result to the abnormality detection apparatus. The abnormality detection apparatus transmits the diagnostic result to the control device.

FIG.1

## Description

[Technical Field]

The present invention relates to an abnormality detection system, a molding machine system, an abnormality detection apparatus, an abnormality detection method and a computer program.

[Background Art]

Patent Document 1 discloses a monitoring method in which by monitoring vibrations of each of the movable parts of an injection molding machine with an acceleration sensor, a state of a molding process and occurrence of an abnormality of the movable parts are detected.

[Prior Art Document]

[Patent Document]

[Patent Document 1] Japanese Patent Application Laid-Open No. H5-50480

[Summary of Invention]

[Problems to be Solved by Invention]

Patent Document 1, however, does not disclose a specific technique of separately providing a control device that performs operation control of a manufacturing device such as an injection molding machine and an apparatus that detects an abnormality of the manufacturing device and diagnoses the condition of the production device. In the case where the control device is configured to detect or diagnose an abnormality of the production device, this has an adverse effect on the operation of the production device, such as delay of the operation control processing.

It is an object of the present disclosure to provide an abnormality detection system, a molding machine system, an abnormality detection apparatus, an abnormality detection method and a computer program that have a control device performing operation control of a production device, an abnormality detection apparatus and a diagnostic apparatus and that can detect an abnormality of the manufacturing device and diagnose the condition of the manufacturing device in conjunction with the respective apparatuses without imposing excessive load on the control device.

[Means for Solving Problems]

An abnormality detection system according to the present disclosure is an abnormality detection system including an abnormality detection apparatus detecting an abnormality of a manufacturing device and a diagnostic apparatus diagnosing a condition of the manufacturing device and comprises: a control device that performs operation control of the manufacturing device and transmits operating data indicating a content of the operation control to the abnormality detection apparatus; a sensor that detects a physical quantity related to operation or a product of the manufacturing device and outputs time-series sensor value data indicating the physical quantity detected to the abnormality detection apparatus; and a database that accumulates information including the operating data, the sensor value data and a condition of the production device, and the abnormality detection apparatus includes a first communication unit that receives the operating data transmitted from the control device, an acquisition unit that acquires the sensor value data output from the sensor, and a processing unit that calculates statistics of the sensor value data acquired by the acquisition unit and determines a presence or an absence of an abnormality of the manufacturing device based on the statistics calculated and a threshold depending on the operating data received, and the first communication unit transmits the operating data and the sensor value data to the diagnostic apparatus, the diagnostic apparatus includes a second communication unit that receives the operating data and the sensor value data that are transmitted from the abnormality detection apparatus, and a diagnostic processing unit that diagnoses a condition of the manufacturing device based on the operating data and the sensor value data that are received by the second communication unit and information accumulated in the database, the second communication unit transmits a diagnostic result from the diagnostic processing unit to the abnormality detection apparatus, and the first communication unit of the abnormality detection apparatus receives the diagnostic result from the diagnostic processing unit and transmits a determination result from the processing unit, the statistics and the diagnostic result from the diagnostic processing unit to the control device.

A molding machine system according to the present disclosure includes the above-mentioned abnormality detection system and a molding machine, and the abnormality detection system is configured to detect an abnormality of the molding machine.

An abnormality detection apparatus according to the present disclosure is an abnormality detection apparatus detecting an abnormality of a manufacturing device and comprises: a communication unit that receives operating data that is transmitted from a control device performing operation control of the production device, the operating data indicating a content of the operation control; an acquisition unit that acquires time-series sensor value data output from a sensor detecting a physical quantity related to operation or a product of the production device; and a processing unit that calculates statistics of the sensor value data acquired by the acquisition unit and determines a presence or an absence of an abnormality of the manufacturing device based on the statistics calculated and a threshold depending on the operating data acquired, and the communication unit transmits the operating data and the sensor value data to an external diagnostic apparatus that diagnoses a condition of the production device, receives a diagnostic result transmitted from the diagnostic apparatus and transmits a determination result from the processing unit, the statistics and the diagnostic result received to the control device.

An abnormality detection method according to the present disclosure is an abnormality detection method causing a computer to execute processing of detecting an abnormality of a production device, the computer executes the processing of receiving operating data that is transmitted from a control device that performs operation control of the production device, the operating data indicating a content of the operation control; acquiring time-series sensor value data output from a sensor that detects a physical quantity related to operation or a product of the production device; calculating statistics of the sensor value data acquired; determining a presence or an absence of an abnormality of the manufacturing device based on the statistics calculated and a threshold depending on the operating data acquired; transmitting the operating data and the sensor value data to an external diagnostic apparatus that diagnoses a condition of the production device; and receiving a diagnostic result transmitted from the diagnostic apparatus and transmitting a determination result indicating a presence or an absence of an abnormality, the statistics and the diagnostic result received to the control device.

A computer program according to the present disclosure is a computer program causing a computer to execute processing of detecting an abnormality of a production device, wherein the computer executes the processing of receiving operating data that is transmitted from a control device performing operation control of the production device, the operating data indicating a content of the operation control; acquiring time-series sensor value data output from a sensor that detects a physical quantity related to operation or a product of the production device; calculating statistics of the sensor value data acquired; determining a presence or an absence of an abnormality of the manufacturing device based on the statistics calculated and a threshold depending on the operating data acquired; transmitting the operating data and the sensor value data to an external diagnostic apparatus that diagnoses a condition of the production device; and receiving a diagnostic result transmitted from the diagnostic apparatus and transmitting a determination result indicating a presence or an absence of an abnormality, the statistics and the diagnostic result received to the control device.

[Effect of Invention]

According to the present disclosure, it is possible to have a control device that performs operation control of a production device, an abnormality detection apparatus and a diagnostic apparatus and to detect an abnormality of the manufacturing device and diagnose the condition of the manufacturing device in conjunction with the respective apparatuses without imposing excessive load on the control device.

[Brief Description of Drawings]

FIG. 1 is a block diagram illustrating an example of the configuration of a molding machine system according to a first embodiment.
FIG. 2 is a schematic diagram illustrating an example of the configuration of a twin-screw kneading extruder according to the first embodiment.
FIG. 3 is a block diagram illustrating an example of the configuration of an abnormality detection apparatus according to the first embodiment.
FIG. 4 is a block diagram illustrating an example of the configuration of a diagnostic apparatus according to the first embodiment.
FIG. 5 is a conceptual diagram illustrating an example of a record layout of a database according to the first embodiment.
FIG. 6 is a flowchart showing a processing procedure related to abnormality detection and diagnosis of the twin-screw kneading extruder according to the first embodiment.
FIG. 7 is a flowchart illustrating a processing procedure related to abnormality detection and diagnosis of the twin-screw kneading extruder according to the first embodiment.
FIG. 8 is a flowchart illustrating a processing procedure for abnormality determination.
FIG. 9 is a flowchart illustrating a processing procedure for abnormality diagnosis.
FIG. 10 is a flowchart illustrating a processing procedure for abnormality diagnosis of a screw shaft 11.
FIG. 11 is time-series data image illustrating the displacement of the two screw shafts.
FIG. 12 is a conceptual diagram presenting the features and abnormality detection result of the time-series data image.
FIG. 13 is a flowchart illustrating a processing procedure for life diagnosis.
FIG. 14 is a conceptual diagram of the outline of a method of generating a learning model.
FIG. 15 is a conceptual diagram of a learning model in a learning phase.
FIG. 16 is a conceptual diagram of a learning model in a test phase.
FIG. 17 is a schematic diagram illustrating a display example of a determination result as abnormal and the like by a control device.
FIG. 18 is a schematic diagram illustrating a display example of a determination result as abnormal and the like by a terminal device.

FIG. 19 is a flowchart illustrating a feedback processing procedure for a diagnostic result according to a second embodiment.

FIG. 20 is a flowchart illustrating a feedback processing procedure related to the condition of the twin-screw kneading extruder according to a third embodiment.

[Mode for Carrying Out Invention]

Specific examples of an abnormality detection system, a molding machine system, an abnormality detection apparatus, an abnormality detection method and a computer program according to embodiments of the present invention will be described below with reference to the drawings. It should be noted that the invention is not limited to these examples, is indicated by the scope of claims, and is intended to include all modifications within the meaning and scope equivalent to the scope of claims. Further, at least a part of the following embodiment and modification may arbitrarily be combined.

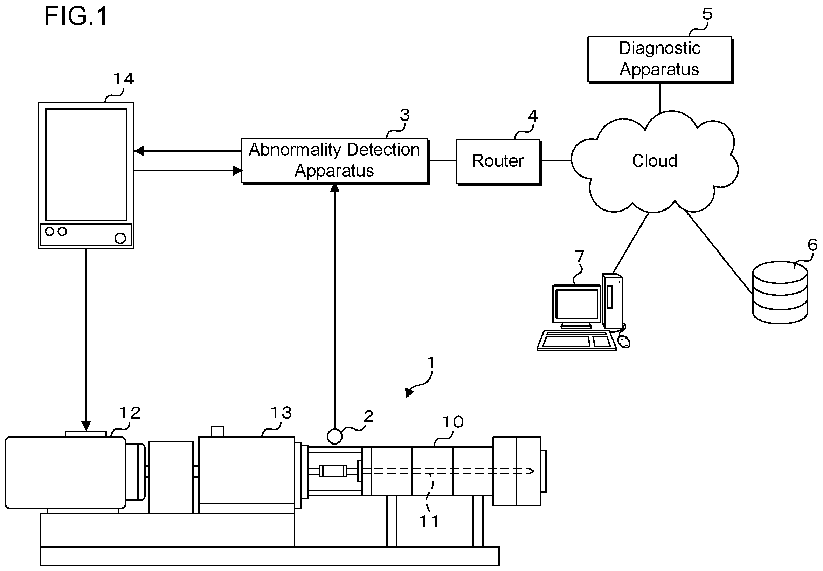

FIG. 1 is a block diagram illustrating an example of the configuration of a molding machine system according to a first embodiment. The molding machine system includes a twin-screw kneading extruder 1, multiple sensors 2, an abnormality detection apparatus 3, a router 4, a diagnostic apparatus 5, a database 6 and a terminal device 7 of the user. Note that the molding machine system is composed of the twin-screw kneading extruder 1 and an abnormality detection system, and the abnormality detection system is composed of the multiple sensors 2, the abnormality detection apparatus 3, the diagnostic apparatus 5 and the database 6.

<Twin-Screw Kneading Extruder 1>

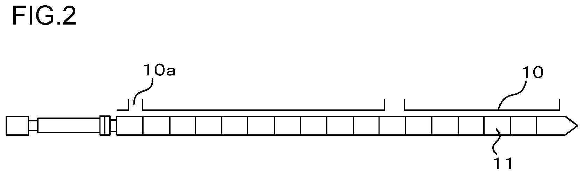

FIG. 2 is a schematic diagram illustrating an example of the configuration of the twin-screw kneading extruder 1 according to the first embodiment. The twin-screw kneading extruder 1 is provided with a cylinder 10 with hopper 10a into which resin raw materials are charged and two screw shafts 11. The two screw shafts 11 are arranged substantially parallel with each other in mesh and are rotatably inserted into a hole of the cylinder 10. The screw shafts 11 carry the resin raw materials loaded into the hopper 10A in the direction of extrusion (to the right in FIG. 1 and FIG. 2) and melt and knead the materials.

The screw shafts 11 are configured as a single screw shaft 11 by combining and integrating several types of screw pieces. For example, the screw shaft 11 is configured by arranging and combining a flight screw-shaped forward flight piece that carries resin raw materials in a forward direction, a reverse flight piece that carries resin raw materials in a reverse direction, a kneading piece that kneads resin raw materials and the like in an order and at positions according to the characteristics of the resin raw materials.

The twin-screw kneading extruder 1 is further provided with a motor 12 that outputs driving force to rotate the screw shaft 11, a gear reducer 13 that reduces the transmission of the driving force output by the motor 12 and a control device 14. The screw shaft 11 is coupled to an output shaft of the gear reducer 13. The screw shaft 11 is rotated by the driving force of the motor 12 that is reduced in transmission speed by the gear reducer 13.

<Sensor 2>

The sensor 2 detects the physical quantities related to operation or a molded product of the twin-screw kneading extruder 1 and outputs time-series sensor value data indicating the detected physical quantities to the abnormality detection apparatus 3. Examples of the physical quantities include temperature, position, velocity, acceleration, current, voltage, pressure, time, image data, torque, force, distortion, power consumption, weight and the like. These physical quantities can be measured using a thermometer, a position sensor, a speed sensor, an accelerometer, an ammeter, a voltmeter, a manometer, a timer, a camera, a torque sensor, a wattmeter, a weightometer and the like.

More specifically, the sensor 2 that detects the physical quantities related to the operation of the twin-screw kneading extruder 1 includes a vibration sensor such as acceleration sensor for detecting vibrations of the gear reducer 13, a torque sensor for detecting shaft torque applied to the screw shaft 11, a thermometer for detecting the temperature of the screw shaft 11, a displacement sensor for detecting displacement of the rotation center of the screw shaft 11, an optical sensor for detecting the dimensions of a molded product or a strand, an imaging device for imaging a molded product or a strand and a resin pressure sensor for detecting resin pressure.

The sensor 2 for detecting the physical quantities related to a molded product includes an optical measuring instrument for detecting the dimensions, chromaticity and luminance of a molded product, an imaging sensor, and a weightometer for detecting the weight of a molded product.

<Control Device 14>

The control device 14 is a computer that performs operation control of the twin-screw kneading extruder 1 and has a transmission/reception unit (not illustrated) for transmitting and receiving information to and from the abnormality detection apparatus 3 and a display unit.

Specifically, the control device 14 transmits operating data indicating an operating condition of the twin-screw kneading extruder 1 to the abnormality detection apparatus 3. The operating data includes, for example, a feeder supply amount (supply amount of the resin raw material), the rotation speed of the screw shaft 11, an extruded amount, a cylinder temperature, a resin pressure and motor current.

The control device 14 receives a determination result, which will be described later, indicating the presence or absence of an abnormality for the twin-screw kneading extruder 1, various statistics of the sensor value data and a diagnostic result determined as abnormal, the life or the like of the twin-screw kneading extruder 1 that are transmitted from the abnormality detection apparatus 3 and displays the received determination result, the values and graph of the statistics and the diagnostic result. Furthermore, the control device 14 executes the processing of monitoring an abnormality of the twin-screw kneading extruder 1 using the determination result or the like, outputting an alert as necessary and stopping the operation of the twin-screw kneading extruder 1.

<Abnormality Detection Apparatus 3>

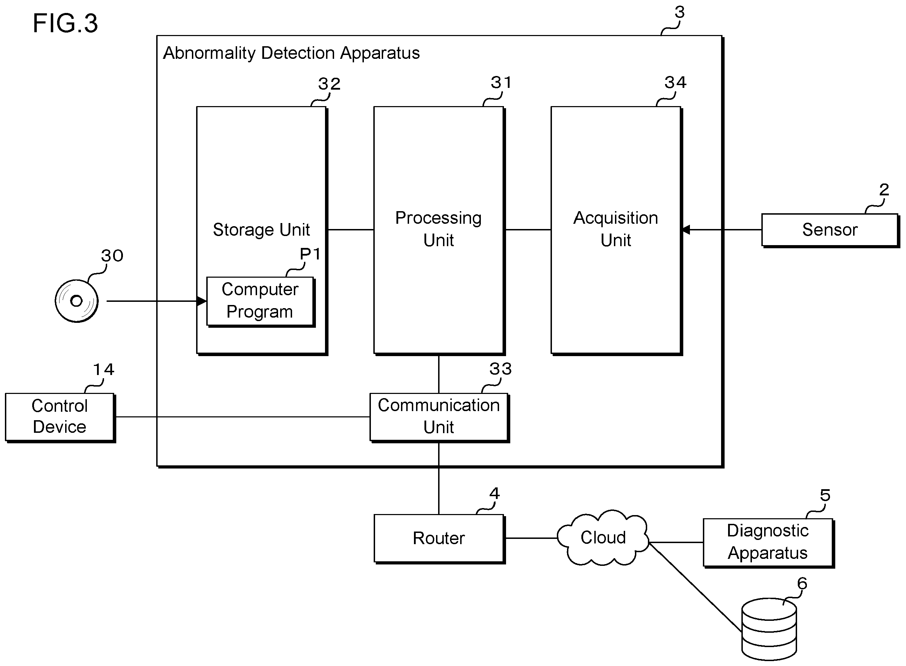

FIG. 3 is a block diagram illustrating an example of the configuration of the abnormality detection apparatus 3 according to the first embodiment. The abnormality detection apparatus 3 is an edge computer and has a processing unit 31, a storage unit 32, a communication unit 33 and an acquisition unit 34. The storage unit 32, the communication unit 33 and the acquisition unit 34 are connected to the processing unit 31. The edge computer constituting the abnormality detection apparatus 3 has a lower hardware specification than the diagnostic apparatus 5, which will be described later, and is for executing simple abnormality detection processing of the twin-screw kneading extruder 1.

The processing unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory), a RAM (Random Access Memory), an I/O terminal and the like. The processing unit 31 functions as the abnormality detection apparatus 3 according to the first embodiment by executing a computer program (program product) P1 stored in the storage unit 32, which will be described later. Note that each functional part of the abnormality detection apparatus 3 may be realized by software, or a part or all of the functional parts thereof may be realized by hardware.

The storage unit 32 is a nonvolatile memory such as a hard disk, an Electrically Erasable Programmable ROM (EEPROM) or a flash memory. The storage unit 32 stores the computer program P1 for causing the computer to execute an abnormality detection method according to the first embodiment.

The computer program P1 according to the first embodiment may be recorded on a recording medium 30 so as to be readable by the computer. The storage unit 32 stores the computer program P1 read from the recording medium 30 by a reader (not illustrated). The recording medium 30 is a semiconductor memory such as a flash memory or the like. Furthermore, the recording medium 30 may be an optical disc such as a CD (Compact Disc)-ROM, a DVD (Digital Versatile Disc)-ROM or a BD (Blu-ray (registered trademark) Disc). Moreover, the recording medium 30 may be a magnetic disk such as a flexible disk or a hard disk, or a magneto-optical disk. In addition, the computer program P1 according to the first embodiment may be downloaded from an external server (not illustrated) connected to a communication network (not illustrated) and may be stored in the storage unit 32.

The communication unit 33 is a communication circuit that transmits and receives information following a predetermined communication protocol such as Ethernet (registered trademark). The communication unit 33 is connected to the control device 14 over a first communication network such as LAN or the like, and the processing unit 31 can transmit and receive various information to and from the control device 14 via the communication unit 33.

The first network is connected to the router 4, and the communication unit 33 is connected to the diagnostic apparatus 5 on cloud, which is a second communication network. The processing unit 31 can transmit and receive various information to and from the diagnostic apparatus 5 via the communication unit 33 and the router 4.

The acquisition unit 34 is an input interface to which signals are input. The acquisition unit 34 is connected to the sensor 2 and receives an input of sensor value data as time-series data that is output from the sensor 2.

<Diagnostic Apparatus 5 and Database 6>

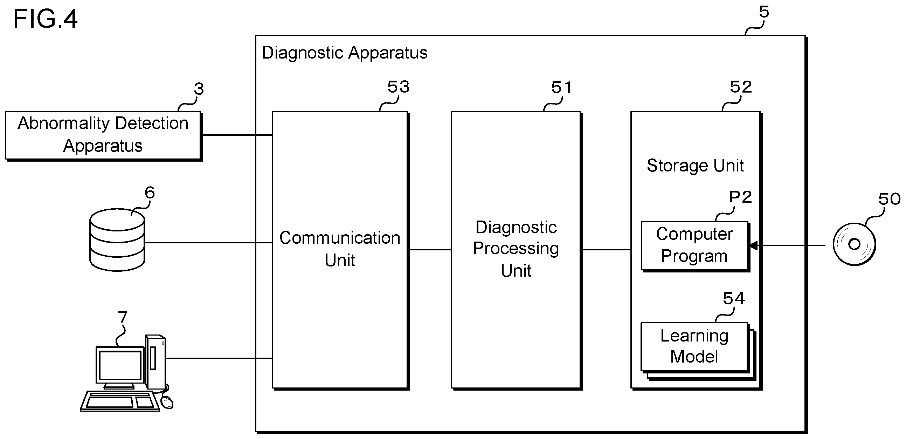

FIG. 4 is a block diagram illustrating an example of the configuration of the diagnostic apparatus 5 according to the first embodiment. The diagnostic apparatus 5 is a computer and includes a diagnostic processing unit 51, a storage unit 52 and a communication unit 53. The storage unit 52 and the communication unit 53 are connected to the diagnostic processing unit 51.

The diagnostic processing unit 51 includes an arithmetic processing circuit such as a CPU, a multi-core CPU, a GPU (Graphics Processing Unit), a General-Purpose computing on Graphics Processing Units (GPGPU), a Tensor Processing Unit (TPU), an ASIC, an FPGA or a Neural Processing Unit (NPU), an internal storage such as a ROM or a RAM, an I/O terminal and the like. The diagnostic processing unit 51 functions as the abnormality detection apparatus 5 according to the first embodiment by executing a computer program (program product) P2 stored in the storage unit 52, which will be described later. Note that each functional part of the diagnostic apparatus 5 may be realized by software, or some or all of the functional parts thereof may be realized by hardware.

The storage unit 52 is a nonvolatile memory such as a hard disk, an EEPROM (Electrically Erasable Programmable ROM) or a flash memory. The storage unit 52 stores the computer program P2 for causing the computer to execute the processing of diagnosing the condition of the twin-screw kneading extruder 1 such as an abnormality and the life of the twin-screw kneading extruder 1 and one or more learning models 54.

The computer program P2 and the learning model 54 may be recorded on a recording medium 50 so as to be readable by the computer. The storage unit 52 stores the computer program P2 and the learning model 54 read from the recording medium 50 by a reader (not illustrated). The recording medium 50 is a semiconductor memory such as a flash memory. Furthermore, the recording medium 50 may be an optical disc such as a CD (Compact Disc)-ROM, a DVD (Digital Versatile Disc)-ROM or a BD (Blu-ray (registered trademark) Disc). Moreover, the recording medium 50 may be a magnetic disk such as a flexible disk or a hard disk, or a magneto-optical disk. In addition, the computer program P2 and the learning model 54 may be downloaded from an external server (not illustrated) connected to a communication network (not illustrated) and stored in the storage unit 52.

The communication unit 53 is a communication circuit that transmits and receives information following a predetermined communication protocol such as the Ethernet (registered trademark). The communication unit 53 is connected to the abnormality detection apparatus 3, the database 6 and the terminal device 7 over the second communication network. The processing nit 51 can thus transmit and receive various information to and from the abnormality detection apparatus 3, the database 6 and the terminal device 7 via the communication unit 53.

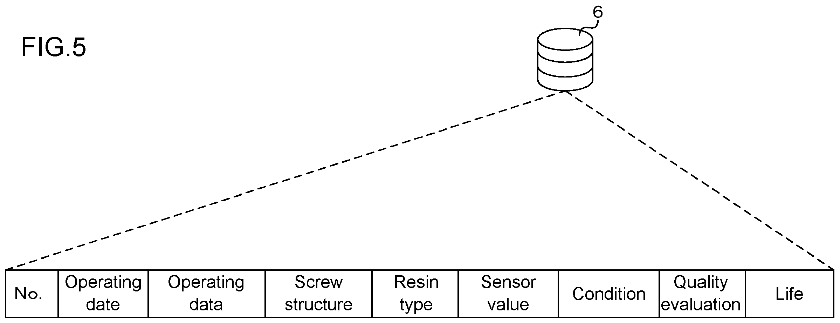

FIG. 5 is a conceptual diagram illustrating an example of a record layout of the database 6 according to the first embodiment. The database 6 is provided with a hard disk and a DataBase Management System (DBMS) and stores various information related to the operation of the twin-screw kneading extruder 1. A table of the database 6 includes a "No." (record number) column, an "operating date" column, a "operating data" column, a "screw structure" column, a "resin type" column, a "sensor value" column, a "condition" column, a "quality evaluation" column and a "life" column.

The "operating date" column stores information indicating the year, month and date when various data to be stored as a record are obtained.

The "operating data" column stores information indicating the operating condition of the twin-screw kneading extruder 1 such as a feeder supply amount (supply amount of resin raw materials), the rotation speed of the screw shaft 11, an extrusion amount, a cylinder temperature, a resin pressure, motor current and the like. The "screw structure" column stores information on the type, arrangement or combination of the various screw pieces that make up of the screw shaft 11.

The "resin type" column stores information indicating the type of resin raw materials supplied to the twin-screw kneading extruder 1.

The "sensor value" column stores sensor value data. The "sensor value" column may store numerical data as it is or store a time-series data image representing the sensor value data that is time-series data, as will be described later.

The "condition" column stores information indicating the condition of the twin-screw kneading extruder 1 when operation control indicated by the above-mentioned operating data is performed, and the above-mentioned sensor value data is obtained. For example, it stores information indicating a normal condition, information indicating an abnormal condition in which the screw shaft 11 is worn out, information indicating an abnormal condition in which resin raw materials not suitable for the above-mentioned screw shaft 11 is used, and information indicating abnormal overload.

The "quality evaluation" column stores information indicating the quality evaluation of a molded product manufactured by the twin-screw kneading extruder 1 when the operation control indicated by the above-mentioned operating data is performed, and the above-mentioned sensor value data is obtained. For example, it stores information indicating whether or not a molded product is normal, information indicating dimensional abnormality or the like.

The "life" column stores information indicating the life of the twin-screw kneading extruder 1 used to obtain the above-mentioned information. The life may be the total product life or may be the remaining life from the time when the above-mentioned data is obtained.

The above-mentioned various data stored in the database 6 are obtained by experimentally operating the twin-screw kneading extruder 1, checking the operating condition of the twin-screw kneading extruder 1 and evaluating the molded product, for example. In addition, the above-mentioned various data may be prepared by simulating the operating condition of the twin-screw kneading extruder 1 by a simulator. In the first embodiment, it is assumed that the database 6 stores the above-mentioned data obtained by experimentally or empirically operating the twin-screw kneading extruder 1 or the above-mentioned data obtained by simulation.

<Examples of Abnormality>

Abnormalities as a target for detection or diagnosis by the abnormality detection apparatus 3 and the diagnostic apparatus 5, respectively, include, for example, abnormal vibrations and overload of the gear reducer 13, dimensional abnormalities of a molded product, flaws, cracks, wear and corrosion of the screw shaft 11, performance degradation or oil abnormalities due to wear on the gear reducer 13 and the components thereof, inefficient operating conditions (increase in consumed energy or the like), operating conditions causing poor quality (forced boot-up or the like), strand abnormalities (defects such as the dimensions, foreign objects, color, twist (distortion) or the like), abnormalities of resin viscosity (quality) and the like.

In the first embodiment, the abnormality detection apparatus 3 detects the abnormal vibrations or overload of the gear reducer 13, a dimensional abnormality of the molded product, a strand abnormality, an abnormality of resin viscosity and the like, based on the sensor value data. Specifically, the abnormality detection apparatus 3 calculates statistics such as the mean, covariance and root mean square for the sensor values and detects the abnormal vibrations or overload of the gear reducer 13, a dimensional abnormality of the molded product, a strand abnormality, an abnormality of resin viscosity and the like with the processing of low load based on the calculated statistics.

On the other hand, the diagnostic apparatus 5 diagnoses the presence or absence of abnormalities such as flaws, cracks, wear and corrosion of the screw shaft 11, performance degradation or oil abnormalities of the gear reducer 13, inefficient operating condition or an operating condition causing poor quality, using the operating data and the sensor value data obtained from the control device 14 via the abnormality detection apparatus 3 and the sensor value data accumulated in the database 6 in the past. In addition, the diagnostic apparatus 5 also performs processing of locating a failure location of the gear reducer 13 such as a bearing and a gear.

Since the allotment of the abnormality detection processing performed by the abnormality detection apparatus 3 and the diagnosis processing performed by the diagnosis apparatus 5 is a mere example, such processing may be executed by the abnormality detection apparatus 3 side if possible.

<Overall Flow of Abnormality Detection Processing>

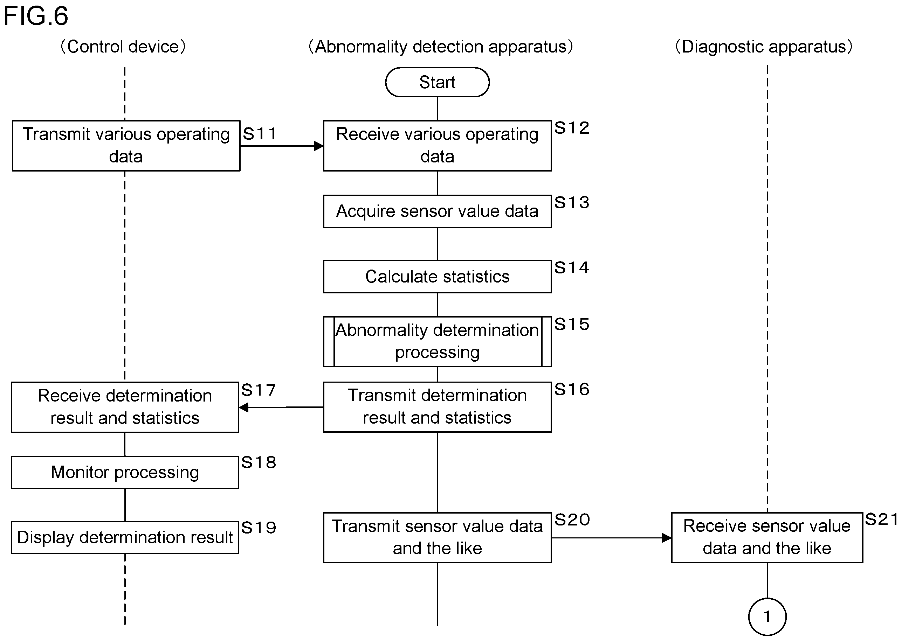

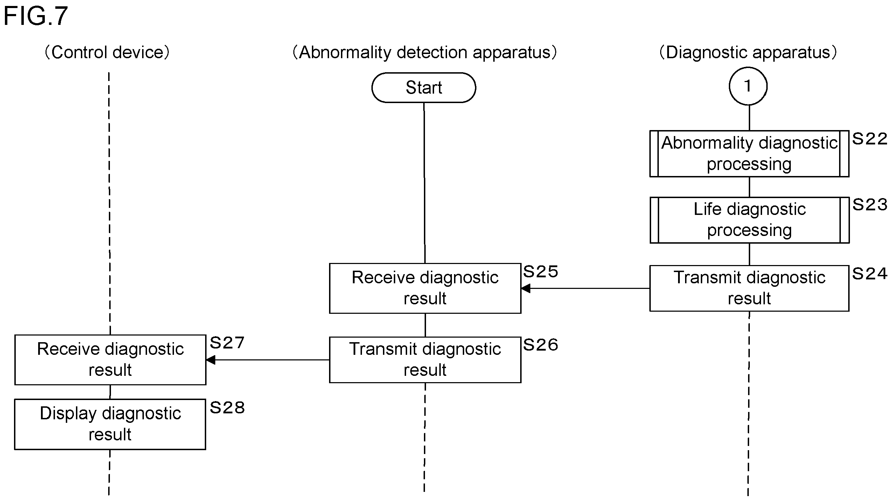

FIG. 6 and FIG. 7 are each a flowchart showing the processing procedure related to abnormality detection and diagnosis of the twin-screw kneading extruder 1 according to the first embodiment. The control device 14 transmits operating data indicating the status of the operation control of the twin-screw kneading extruder 1 to the abnormality detection apparatus 3 (step S11).

The processing unit 31 of the abnormality detection apparatus 3 receives the operating data transmitted from the control device 14 through the communication unit 33 (step S12).

The processing unit 31 acquires time-series sensor value data that is output from the sensor 2 (step S13). The processing unit 31 calculates statistics such as the mean, covariance and root mean square for the sensor values based on the sensor value data (step S14) and performs abnormality determination processing on the twin-screw kneading extruder 1 based on the calculated statistics (step S15).

The processing unit 31 then transmits the determination result indicating the presence or absence of an abnormality for the twin-screw kneading extruder 1 and the statistics calculated at step S14 to the control device 14 through the communication unit 33 (step S16).

The control device 14 receives the determination result and the statistics transmitted from the abnormality detection apparatus 3 (step S17) and monitors the operation of the twin-screw kneading extruder 1 based on the received determination result or statistics (step S18). For example, if the determination result indicates a predetermined abnormality, the control device 14 stops the operation control of the twin-screw kneading extruder 1.

The control device 14 then causes a display unit to display the received determination result, the statistics and the like (step S19).

Next, the processing of the abnormality detection apparatus 3 having transmitted the determination result and the statistics is described. The processing unit 31 of the abnormality detection apparatus 3 having finished the processing at step S16 transmits the operating data received at step S12 and the sensor value data acquired at step S13 to the diagnostic apparatus 5 through the communication unit 33 (step S20).

The diagnostic apparatus 5 receives the operating data and the sensor value data that are transmitted from the abnormality detection apparatus 3 (step S21). The diagnostic processing unit 51 performs abnormality diagnostic processing on the twin-screw kneading extruder 1 based on the received operating data and sensor value data and the sensor value data accumulated in the database 6 in the past (step S22). Furthermore, the diagnostic processing unit 51 executes life diagnostic processing for the twin-screw kneading extruder 1 (step S23). The diagnostic processing unit 51 evaluates material fatigue from the waveform of the axial torque, for example, to calculate the remaining life.

The diagnostic processing unit 51 having finished processing at steps S22 and S23 transmits the diagnostic result to the abnormality detection apparatus 3 through the communication unit 53 (step S24).

The processing unit 31 of the abnormality detection apparatus 3 receives the diagnostic result transmitted from the diagnostic apparatus 5 (step S25) and transmits the received diagnostic result to the control device 14 through the communication unit 33 (step S26).

The control device 14 receives the diagnostic result transmitted from the abnormality detection apparatus 3 (step S27) and displays the received diagnostic result on the display unit (step S28).

Note that in response to a request from the terminal device 7, the abnormality detection apparatus 3 can transmit the result of the abnormality determination by the processing unit 31, the calculated statistics of the sensor value data, the diagnostic result from the diagnostic processing unit 51 and the like to the terminal device 7. The terminal device 7 displays the received determination result as abnormal, statistics and diagnostic result.

<Abnormality Detection Processing by Abnormality Detection Apparatus 3>

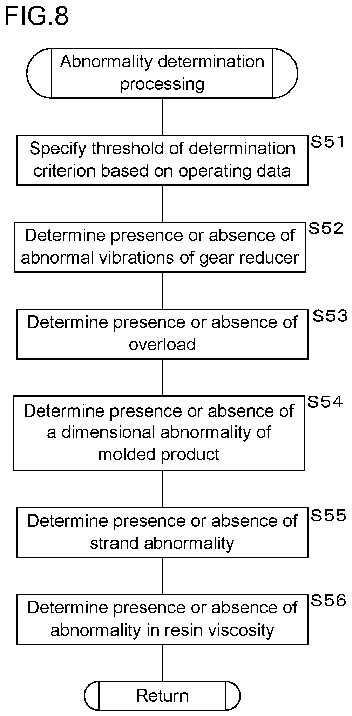

FIG. 8 is a flowchart illustrating a processing procedure for abnormality determination. Since the abnormality detection apparatus 3 cannot store a large amount of sensor value data, it performs processing of determining the presence or absence of an abnormality in the twin-screw kneading extruder 1 using the operating data and sensor value data of the day.

The processing unit 31 specifies a threshold of the determination criterion for determining the presence or absence of an abnormality in the twin-screw kneading extruder 1 based on the operating data received at step S12 (step S51). For example, because the axial torque and the rotation speed of the screw shaft 11 have an inverse relationship, the threshold for detecting overload of the torque depends on the rotation speed of the screw shaft 11, which is one of the operating data. The processing unit 31 thus can specify the threshold for detecting an abnormality based on the operating data.

Specifically, the abnormality detection apparatus 3 stores, in the storage 32, the table containing the operating data, the types of abnormalities and the thresholds of the determination criteria in association with one another. The processing unit 31 reads a threshold using the operating data with reference to the table to thereby specify the threshold as a criterion for each abnormality corresponding to the operating data.

The processing unit 31 then determines the presence or absence of abnormal vibrations of the gear reducer 13 based on the statistics of the sensor value data indicating vibrations of the gear reducer 13 and the threshold specified at step S51 (step S52). It is noted that the processing unit 31 may be configured to convert the sensor value data indicating the vibrations of the gear reducer 13 into a time-frequency component and determine the presence or absence of an abnormality of the gear reducer 13 based on the data of the time-frequency component.

Moreover, the processing unit 31 determines the presence or absence of overload based on the statistics of the sensor value data indicating the axial torque, the temperature of the screw shaft 11 and the displacement of the rotation center of the screw shaft 11 and the threshold specified at step S51 (step S53).

Additionally, the processing unit 31 determines the presence or absence of a dimensional abnormality of a molded product based on the statistics indicating the dimensions of the molded product and the threshold specified at step S51 (step S54).

The processing unit 31 determines the presence or absence of strand abnormality based on statistics indicating the difference between the image obtained by imaging a strand and the image in the normal condition and the threshold specified at step S51 (step S55). It is noted that the processing unit 31 can measure the diameter of the strand according to the pixel size (number of pixels) of the image of the strand included in the imaged image. The processing unit 31 can also determine the presence or absence of a foreign object by determining the color of the image section included in the imaged image.

The processing unit 31 determines the presence or absence of an abnormality in the resin viscosity based on the time average of the resin pressure detected by the sensor 2, for example, resin pressure sensor and the threshold determined at step S51 (step S56), and ends the abnormality detection processing.

<Abnormality Diagnosis Processing by Diagnostic Apparatus 5>

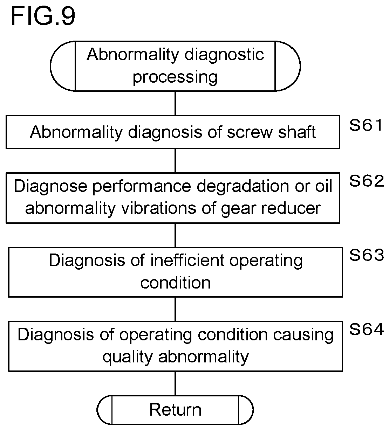

FIG. 9 is a flowchart illustrating a processing procedure for abnormality diagnosis. The diagnostic processing unit 51 performs abnormality diagnosis of the screw shaft 11 by inputting, into the learning model 54, sensor value data indicating the displacement of the rotation center of the screw shaft 11 or time-frequency data obtained by performing a time-frequency analysis on the sensor value data (step S61).

The learning model 54 used at step S61 is a convolutional neural network model that, if receiving an input of a time-series data image representing the time-series sensor value data in an image, for example, extracts the feature of the time-series data image and outputs the extracted feature. The learning model 54 is a CNN (Convolutional Neural Network) model having a feature extraction layer, for example, a one-class classification model. The diagnostic processing unit 51 can diagnose the presence or absence of an abnormality in the screw shaft 11 by comparing the features that are obtained from the sensor value data that are associated with the operating data the same as or similar to the operating data received at step S12 and obtained when the twin-screw kneading extruder 1 is operating normally with the feature as a target for diagnosis. The details of the generation method and the configuration of the learning model 54 are described below.

Furthermore, the diagnostic processing unit 51 diagnoses performance degradation or an oil abnormality due to wear of the gear reducer 13 and the components thereof by inputting, to the learning model 54, vibration sensor data obtained from the sensor 2 installed in the gear reducer 13, for example, the vibration sensor or time-frequency data obtained by performing the time-frequency analysis on the sensor value data (step S62).

The learning model 54 used at step S62 is, for example, a support vector machine. This support vector machine is a classifier that learns time-frequency components obtained by performing a time-frequency analysis on the vibration sensor data for a normal gear reducer 13 and time-frequency components obtained by performing a time-frequency analysis on the vibration sensor data for an abnormal gear reducer 13 and makes classification into a normal class for the normal gear reducer 13 and an abnormal class for the abnormal gear reducer 13. It is noted that the frequency components to be analyzed may be specific frequency components, such as main frequency components obtained from the gear reducer 13 or the failure frequency components that appear at the time of failure. For example, the diagnostic processing unit 51 specifies main frequency components and failure frequency components obtained by performing a time-frequency analysis on the vibration sensor data. The diagnostic processing unit 51 then inputs, to the support vector machine, the time-frequency components of the vibration sensor data, for example, the main frequency components and the failure frequency components to diagnose whether or not the gear reducer 13 is normal.

The learning model 54 may be a classifier using a convolutional neural network model. The learning model 54 may be trained so as to output data indicating the location of abnormality in the gear reducer 13 and the level of the abnormality if receiving an input of the vibration sensor data or the time-frequency data obtained by performing a time-frequency analysis on the sensor value data. The location of abnormality is, for example, a bearing or a gear of the gear reducer 13.

In addition, the diagnostic processing unit 51 diagnoses whether or not the twin-screw kneading extruder 1 is in an inefficient operating condition by inputting, into the learning model 54, the sensor value data indicating the axial torque, the displacement of the rotation center of the screw shaft 11 and the vibration that are obtained from the sensor 2 or the time-frequency data obtained by performing a time-frequency analysis on the sensor value data (step S63).

The learning model 54 used at step S63 is a convolutional neural network model that, if a time-series data image to be described later representing the sensor value data that is time-series data is input, extracts the feature of the time-series data image and outputs the extracted feature. The learning model 54 is a CNN model having a feature extraction layer such as a one-class classification model.

The diagnostic processing unit 51 can diagnose whether or not the twin-screw kneading extruder 1 is in the inefficient operating condition by comparing the features that are associated with the operating data the same as or similar to the operating data received at step S12 and obtained when the twin-screw kneading extruder 1 is in the efficient operating condition with the feature as a target for diagnosis.

Additionally, the diagnostic processing unit 51 diagnoses whether or not the twin-screw kneading extruder 1 is in an operating condition causing a quality abnormality by inputting, into the learning model 54, the sensor value data indicating the axial torque, the displacement of the rotation center of the screw shaft 11 and the vibration that are obtained from the sensor 2 or the time-frequency data obtained by performing a time-frequency analysis on the sensor value data (step S64).

The learning model 54 used at step S64 is a convolutional neural network model that, if a time-series data image to be described later representing the sensor value data that is time-series data is input, extracts the feature of the time-series data image and outputs the extracted feature. The learning model 54 is a CNN model having a feature extraction layer such as a one-class classification model.

The diagnostic processing unit 51 can diagnose whether or not the twin-screw kneading extruder 1 is in an operating condition causing a quality abnormality by comparing the features that are obtained from the sensor value data that is associated with the operating data the same as or similar to the operating data received at step S12 and obtained when the twin-screw kneading extruder 1 is in the normal operating condition, not the operating condition causing a quality abnormality with the feature of a target for diagnosis.

It is noted that the diagnostic processing unit 51 may be configured to monitor the rate of operation by monitoring energization data obtained from the control device 14 via the abnormality detection apparatus 3 and calculating the rate of operation for a constant time period. The diagnostic processing unit 51 may be configured to diagnose the presence or absence of an abnormality of the twin-screw kneading extruder 1 based on the operating rate.

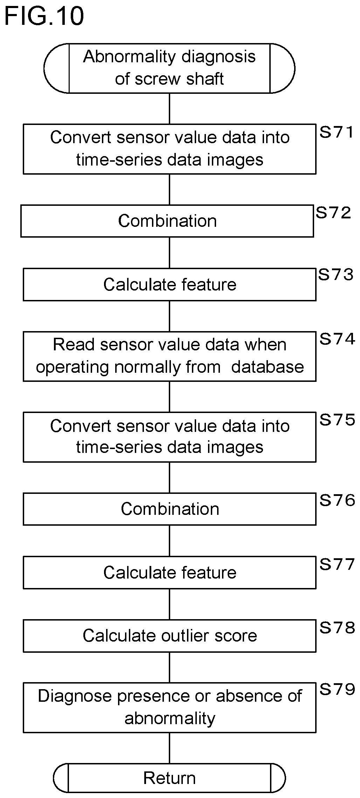

The abnormality diagnosis of the screw shaft is described in detail below as an example of the one-class classification model. FIG. 10 is a flowchart illustrating a processing procedure for abnormality diagnosis of the screw shaft 11. The diagnostic processing unit 51 converts multiple pieces of sensor value data into one or more time-series data images representing the multiple pieces of sensor value data (step S71) and combines these time-series data image into one sheet of time-series data image in the case where the number of converted time-series data images is more than one (step S72). For example, in the case where the sensor value data is data indicating the displacement in two directions of each of the two screw shafts 11, the diagnostic processing unit 51 combines a first time-series data image representing an image of displacements in the two directions of the rotation center for a first screw shaft 11 and second time-series data image representing an image of displacements in the two directions of the rotation center for the second screw shaft 11.

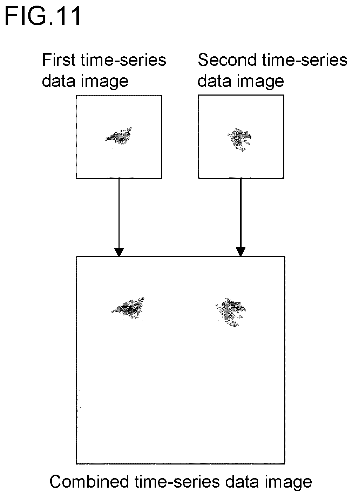

FIG. 11 is time-series data image illustrating the displacements of the two screw shafts 11. The first time-series data image indicates the displacements of the first screw shaft 11. The first time-series data image is a substantially square image, and the amounts of displacements in the X-axis and Y-axis directions orthogonal to the rotation center of the screw shaft 11 are plotted as coordinate values of the X-axis and Y-axis. The first time-series data image is obtained by plotting three rotations of displacement. The second time-series data image can also be created in the same manner.

The combined time-series data image is a substantially square image that is twice (four times for the area) as large as the first time-series data image. The time-series data image contains the information of the original image as it is without changing the aspect ratio of the first time-series data image and the second time-series data image. Specifically, the time-series data image includes the first time-series data image and the second time-series data image arranged side by side at the upper part of FIG. 11 and a blank image that is arranged at the lower part to make the time-series data image substantially square. The method of arranging the first and second time-series data images and the blank image is not limited to a particular one as long as the first time-series data image and the second time-series data image are included as they are.

Note that other multiple pieces of sensor value data can be converted to time-series data images and combined in a similar manner. In the example illustrated in FIG. 11, a total of eight sensor value data can be represented by an image. When nine sheets of time-series data images of 3 x 3 are combined, 18 pieces of sensor value data can be represented by one sheet of time-series data image.

Next, the diagnostic processing unit 51 inputs the time-series data image combined at step S72 to the learning model 54 to thereby calculate the feature of the time-series data image (step S73).

In addition, the diagnostic processing unit 51 reads, from the database 6, the sensor value data that is associated with the operating data the same as or similar to the operating data received at step S12 and obtained when the twin-screw kneading extruder 1 is operating normally (step S74), similarly converts the sensor value data into the time-series data images (step S75), combines the time-series data images (step S76), and inputs the combined time-series data image into the learning model 54 to thereby calculate the feature of the time-series data image during the normal operation (step S77).

Next, the diagnostic processing unit 51 calculates an outlier score of the feature of the time-series data image calculated at step S73 (step S78). The outlier score is obtained by evaluating the ratios of the outlier of the feature of the time-series data image calculated at step S77 to the features of the time-series data image (hereinafter referred to as the sample feature) obtained when the normal twin-screw kneading extruder 1 operates and converting the ratios into numbers. The outlier score is, for example, Local Outlier Factor (LOF). The LOF can be expressed as the ratio $<ld(Q)>/ld(P)$ which is the ratio of the average of the local densities $<ld(Q)>$ of the features (k pieces of sample features nearest to the feature) in the group neighboring the feature as a target to

the local density ld (P), which is the feature as a target for abnormality detection. As the LOF is larger than one, the outlier degree is greater. It is noted that P indicates the feature as a target for abnormality detection, and Q indicates the sample feature described above.

The processing unit 31 then determines whether or not the calculated outlier score is equal to or larger than a predetermined threshold to judge the presence or absence of an abnormality of the twin-screw kneading extruder 1 (step S79). If the outlier score corresponds to the LOF described above, the threshold is a value equal to or larger than one. The diagnostic processing unit 51 determines to be abnormal if the LOF is equal to or larger than the threshold and determines to be normal if the LOF is smaller than the threshold.

Note that the abnormality determination using the LOF as described above is one example, and it may be possible to determine whether or not the twin-screw kneading extruder 1 is abnormal using the k-Nearest Neighbor algorithm and the SVM. In addition, it may be configured to determine whether or not the twin-screw kneading extruder 1 is abnormal by judging whether or not the feature of the target for an abnormality detection is far from the sample feature in the normal condition using the Hotelling's method.

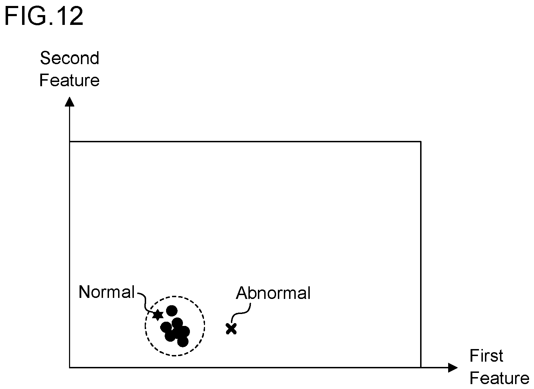

FIG. 12 is a conceptual diagram presenting the features of the time-series data image and the detection result of abnormality. FIG. 12 is obtained by dimensionally-reducing high-dimensional features of the time-series data image to two-dimensional features and plotting them on a two-dimensional plane. The horizontal axis and the vertical axis of the graph in FIG. 12 respectively indicate the first feature and the second feature of the dimensionally reduced time-series data image. The dimensional compression of the features can be performed by dimensional reduction algorithms such as t-SNE, for example.

As illustrated in FIG. 12, the learning model 54 is trained so that the local density of the features in the normal condition that is output from the learning model 54 is high.

The dashed line circle represents the image of the threshold. If the statistical distance between the feature of the time-series data image as the target for abnormality detection (for example, a star-shaped hexagonal plot) and a group of features of the time-series data image in the normal condition is short (the local density is relatively high) and the LOF value is small, the twin-screw kneading extruder 1 is presumed to be in the normal condition. If the statistical distance between the feature of the time-series data image as the target for abnormality detection (for example, the X plot) and the group of features of the time-series data image in the normal condition (the local density is relatively low) and the LOF value is large, the twin-screw kneading extruder 1 is presumed to be in the abnormal condition.

By the abnormality diagnosis using the displacement of the rotation center of the screw shaft 11, the presence or absence of an abnormality such as wear of the screw shaft 11 can be diagnosed.

Though abnormality detection based on the displacement of the screw shaft 11 is mainly described, the abnormality detection is not limited thereto. For example, a frequency spectrum is calculated based on the sensor value data indicating the vibrations of the gear reducer 13. A time-series data image representing the frequency spectrum as an image is generated. Using the generated time-series data image, the abnormal vibrations of the gear reducer 13 can be diagnosed.

Furthermore, a time-series data image is generated that represents as an image the sensor value data indicating the axial torque applied to the screw shaft 11, and using the generated time-series data image, the presence or absence of overload can be diagnosed.

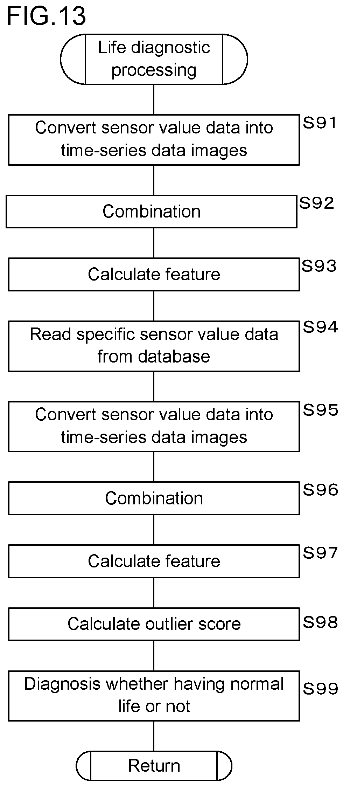

FIG. 13 is a flowchart illustrating a processing procedure for life diagnosis. The diagnostic processing unit 51 converts multiple pieces of sensor value data into one or more time-series data images (step S91), and combines the multiple time-series data images to form a sheet of time-series data image in the case where the number of converted time-series data images is more than one (step S92). The sensor value data is data indicating the displacement of the rotation center of the axial torque or the screw shaft 11, for example. Next, the diagnostic processing unit 51 inputs the time-series data image combined at step S92 to the learning model 54 to calculate the feature of the time-series data image (step S93).

The diagnostic processing unit 51 reads, from the database 6, specific sensor value data, for example, sensor value data of the twin-screw kneading extruder 1 having a normal life that is associated with the operating data the same as or similar to the operating data received at step S12 (step S94), converts the sensor value data into time-series data images in a similar manner (step S95), combines the time-series data images (step S96) and inputs the combined time-series data image to the learning model 54 to calculate feature of the time-series data image related to the twin-screw kneading extruder 1 having the normal life (step S97).

The diagnostic processing unit 51 then calculates an outlier score of the feature of the time-series data image calculated at step S97 (step S98). The processing unit 31 then determines whether or not the twin-screw kneading extruder 1 as a target for diagnosis has a normal life by determining whether or not the calculated outlier score is equal to or larger than a predetermined threshold (step S99). If the outlier score corresponds to the above-described LOF, the threshold is a value equal to or larger than one. The diagnostic processing unit 51 determines that the life is short if the LOF is equal to or larger than the threshold, and determines that the life is normal if the LOF is smaller than the threshold.

Though an example of diagnosing whether or not the life is normal is here described, whether or not the twin-screw kneading extruder 1 has a specific life may be determined by comparing the features of the sensor value data obtained from the twin-screw kneading extruder 1 having a specific life with the feature of the current sensor value data.

<Learning Model Generation Method>

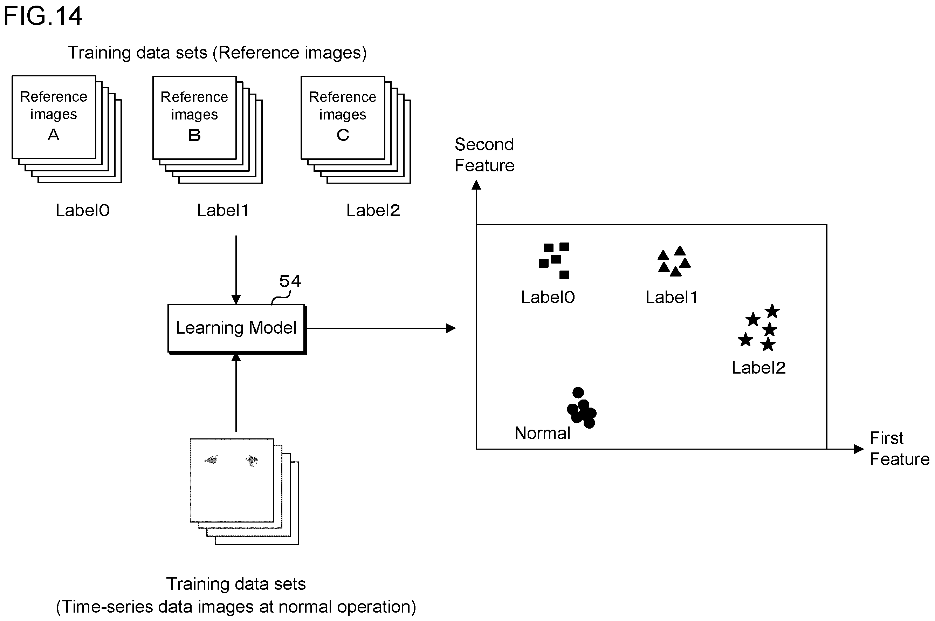

A method of generating the learning model 54 used for diagnostic processing by the diagnostic apparatus 5 is described. FIG. 14 is a conceptual diagram of the outline of the method of generating the learning model 54. Described is a method of generating the learning model 54 for determining whether or not the operation of the twin-screw kneading extruder 1 is normal. The following describes an example in which the diagnostic processing unit 51 of the diagnostic apparatus 5 machine-trains the learning model 54.

First, multiple time-series data images detected and obtained when the twin-screw kneading extruder 1 is operating normally and arbitrary multiple sets of reference images A, B and C that are not associated with the time-series data images are prepared as training datasets necessary to generate a one-class classification model. The reference images A, reference images B and reference images C are image data of multiple classes selected from training datasets such as Image Net, for example. In the example illustrated in FIG. 14, the reference images A, reference images B and reference images C denoted with the label 0, label 1 and label 2 are prepared.

Subsequently, the learning model 54, which has a feature extraction layer consisting of multiple convolutional layers and multiple pooling layers for extracting the feature of an image, is trained with time-series data images at normal operation and the reference images A, reference images B and reference images C. Specifically, the diagnostic processing unit 51 trains the leaning model 54 so as to output features capable of identifying the type of each image, that is, having a high local density of the features of the time-series data images as illustrated at the right of FIG. 14 and having a high distinguishability among the features of the reference images A, B and C.

The method of generating the one-class classification model is described in detail below.

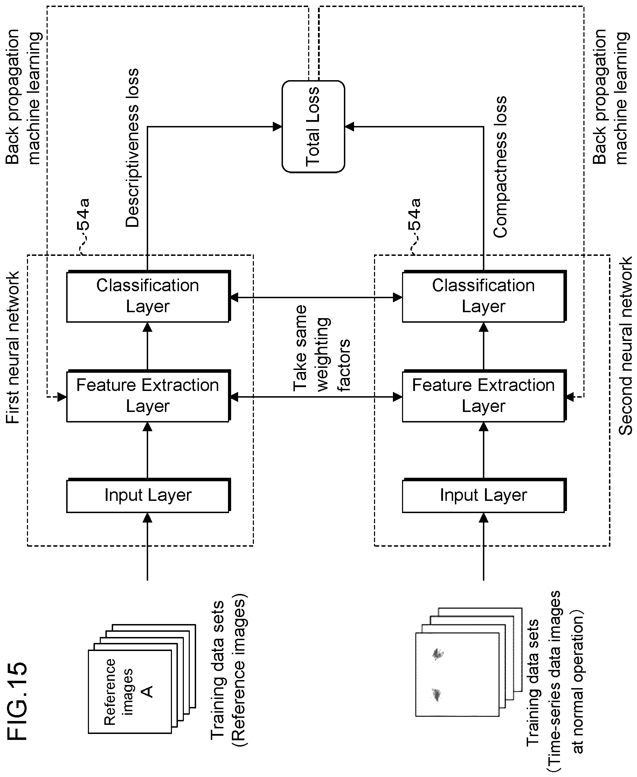

FIG. 15 is a conceptual diagram of the learning model 54 in a learning phase. First, a first neural network (reference network) 54a and a second neural network (secondary network) 54a are prepared.

The first neural network 54a is a CNN model having an input layer, a feature extraction layer and a classification layer. The feature extraction layer has a structure of alternating multiple convolutional layers and multiple pooling layers. The classification layer has one or more fully connected layers, for example. The first neural network 54a is pre-trained using training datasets such as Image Net, for example.

The second neural network 54a has the same network configuration as the first neural network 54a and also has the same various parameters (weighting factors) that characterize the feature extraction layer and the classification layer. In the learning phase of the first neural network 54a and the second neural network 54a, the various parameters in the feature extraction layer and the classification layer are assumed to take the same values.

The diagnostic processing unit 51 then inputs the reference images A into the first neural network 54a and calculates a descriptiveness loss, which is a loss function. On the other hand, the diagnostic processing unit 51 inputs time-series data images obtained in the normal condition to the second neural network 54a and calculates a compactness loss, which is a loss function. The descriptiveness loss is a loss function commonly used in learning for the classifier such as a cross-entropy error, for example. The compactness loss is expressed by the following equations (1), (2) and (3). The compactness loss is a value corresponding to the dispersion of the output of the second neural network 54a in the batch, that is, in the training datasets.

[Equation 1]

$$z_i = x_i - m_i \quad \cdots \quad (1)$$

$$m_i = \frac{1}{n-1}\sum_{j \neq i} x_j \quad \cdots \quad (2)$$

$$l_C = \frac{1}{nk}\sum_{i=1}^{n} z_i^T z_i \quad \cdots \quad (3)$$

Where

i :   A serial number indicating each of the time-series data images for training
n :   Batch size (the number of time-series data images for training)
$x_i$ :   Feature
k :   Dimension of the feature

The diagnostic processing unit 51 then calculates a total loss based on the descriptiveness loss and the compactness loss. The total loss is expressed by the following Equation (4), for example.

[Equation 2]

$$L = l_D + \lambda l_C \quad \cdots \quad (4)$$

Where

L :   Total loss
$l_D$ :   Descriptiveness loss
$l_C$ :   Compactness loss
$\lambda$ :   Constant (e.g., 0.1)

The diagnostic processing unit 51 trains the first neural network 54a and the second neural network 54a by optimizing the various parameters in the first neural network 54a and the second neural network 54a using the back propagation method or the like so that the total loss expressed by (4) above is reduced. When the machine learning is performed, the various parameters in the previous stage may be fixed while the parameters in the multiple layers in the later stage may be adjusted.

The features output from the feature extraction layers of the thus trained first neural network 54a and second neural network 54a each have a high local density of the features of the time-series data image obtained when the twin-screw kneading extruder 1 is in the normal condition and have a low local density with the features for other arbitrary image as illustrated in FIG. 14.

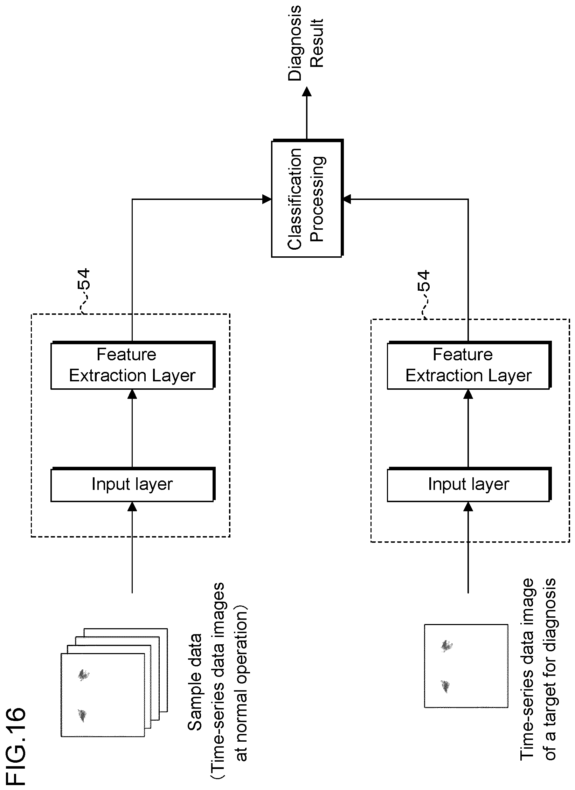

FIG. 16 is a conceptual diagram of the learning model 54 in a test phase. As illustrated in FIG. 16, the learning model 54 according to the first embodiment can be composed of the input layer and the feature extraction layer of the second neural network 54a trained as described above. The classification layer illustrated in FIG. 15 is thus not a necessary component for the learning model 54 according to the first embodiment 1. The second neural network 54a illustrated in FIG. 15 can however be used for the learning model 54 as it is to employ the feature output from the feature extraction layer.

Though FIG. 16 illustrates the two learning models 54, it conceptually presents a state in which the time-series data image as a target for detection and the time-series data image obtained in the normal condition as a sample are input and does not represent the presence of the two models.

In the test phase, by inputting the time-series data image obtained in the normal condition as sample data to the learning model 54, the diagnostic processing unit 51 causes the learning model 54 to output the feature of the time-series data image in the normal condition. On the other hand, by inputting the time-series data image as a target for abnormality detection to the learning model 54, the diagnostic processing unit 51 causes the learning model 54 to output the feature of the time-series data image. The diagnostic processing unit 51 calculates an outlier score of the feature as a target for abnormality detection relative to the feature of the sample data, compares the calculated outlier score with the threshold to determine whether or not the time-series data image as a target for abnormality detection is abnormal, that is, whether or not the twin-screw kneading extruder 1 is abnormal.

Though FIG. 16 illustrates an example in which the sample data is input to the learning model 54 to calculate the feature of this sample data, an outlier score may be calculated by having stored the features of multiple pieces of sample data that are calculated in advance in the storage unit 32, and using the features of the sample data stored in the storage 32 in the abnormality detection processing.

Though the learning model 54 for diagnosing the presence or absence of an abnormality of the twin-screw kneading extruder 1 is described, the learning model 54 for diagnosing whether or not the twin-screw kneading extruder 1 has a normal life may be generated by training the learning model 54 using the sensor value data obtained from the twin-screw kneading extruder 1 having a normal life.

Though an example of making a classification between the normal condition and the abnormal condition is described above, by using the learning model 54 consisting of multiple one-class classification models, the time-series image data in the typical abnormal condition may be distinguished from the time-series data images obtained in the other abnormal conditions. For example, the abnormality detection apparatus 3 is provided with the first learning model 54 that is trained with the time-series data images obtained in the normal condition as in the first embodiment as described above. The abnormality detection apparatus 3 is further provided with a second learning model 54 that is trained with the time-series data image obtained in the normal condition and time-series data image in a first abnormal condition. The abnormality detection apparatus 3 can distinguish among the time-series data image in the normal condition, the time-series data image in the first abnormal condition and the time-series data image in the other abnormal conditions by using the first learning model 54 and the second learning model 54. Likewise, by having three or more learning models 54, the abnormality detection apparatus 3 can be configured to distinguish among the time-series data images in the two or more abnormal conditions.

Though the abnormality diagnosis of the screw axis is described in detail, the learning models 54 for diagnosing an inefficient operating condition and an operating condition causing quality abnormality at steps S63 and S64, respectively, can also be configured and generated in the same manner.

Though the one-class classification model is described as an example of the learning model 54, general neural networks such as CNN, U-Net and RNN (Recurrent Neural Network) and other Support Vector Machines (SVMs), Bayesian networks or regression trees other than the general neural networks may also be used.

For example, in the case where the sensor value data in the normal condition and the sensor value data in the various abnormal conditions are accumulated, training data sets obtained by labeling the sensor value data or time-series data image with the condition of the twin-screw kneading extruder 1 set as teacher data are created, and the learning model 54 composed of CNN or the like may be trained using these training data sets. The condition of the twin-screw kneading extruder 1 includes the normal condition indicating that the twin-screw kneading extruder 1 is normal, the abnormal condition in which the screw shaft 11 is worn out, the abnormal condition in which resin raw materials not suitable for the screw shaft 11 is used and an overload abnormal condition in which overload occurs, abnormal vibrations of the gear reducer 13, the abnormal condition of short life and the abnormal condition of dimensional abnormality of a molded product and the like.

The learning model 54 has an input layer, an intermediate layer and an output layer. The intermediate layer has multiple convolutional layers and multiple pooling layers for extracting the feature of an image. The output layer has multiple nodes corresponding to the multiple conditions of the twin-screw kneading extruder 1 and outputs the certainty factors corresponding to these conditions. The learning model 54 optimizes the weighting factors in the intermediate layer so that the condition of the twin-screw kneading extruder 1 output from the learning model 54 if the sensor value data or the time-series data images related to the sensor value data are input is close to the condition indicated by the teacher data. Such weighting factors are weights (coupling coefficients) between neurons, for example. Various methods can be used for optimizing parameters such as the steepest-descent method, the error back propagation method or the like though not limited to a particular one.

According to the learning model 54 thus generated, the condition of the twin-screw kneading extruder 1 can be diagnosed by inputting, to the learning model 54, the time-series data image of the sensor value data obtained from the twin-screw kneading extruder 1 as a target for diagnosis. For example, the diagnostic processing unit 51 determines that the twin-screw kneading extruder 1 is in a condition of the node that outputs the highest certainty.

In addition, the learning model 54 may be configured to output more optimal molding conditions or adjustment amounts of the molding conditions if the time-series data image is input. The diagnostic apparatus 5 transmits the molding conditions output from the learning model 54 to the abnormality detection apparatus 3, and the abnormality detection apparatus 3 transmits the received molding conditions to the control device 14.

<Display Processing of Diagnosis Result and Determination Result>

A display example of the determination result and statistics and the like at step S19 is described.

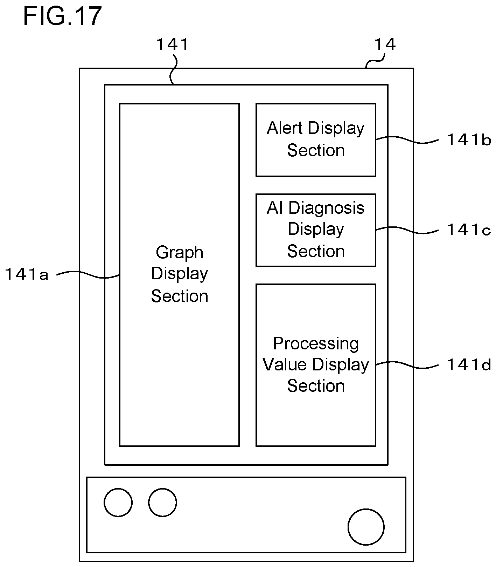

FIG. 17 is a schematic diagram illustrating a display example of the determination result as abnormal and the like of the control device 14. A determination result display screen 141 displayed on the display unit has a graph display section 141a, an alert display section 141b, an AI diagnosis display section 141c and a processing value display section 141d. For example, the graph display section 141a graphically displays variations with time of the axial torque, vibrations of the screw shaft 11 and statistics of the displacements. The alert display section 141b displays the received determination result indicating the presence or absence of an abnormality of the twin-screw kneading extruder 1 and displays the details of alert if an abnormality is present. The AI diagnosis display section 141c displays a diagnostic result, which will be described later, by the diagnostic apparatus 5. The processing value display section 141d displays the values of the received statistics.

A display example of the diagnostic result at step S28 is described.

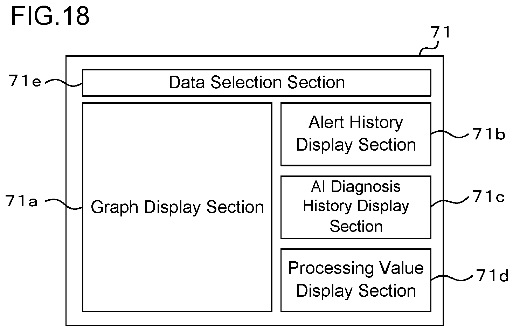

FIG. 18 is a schematic diagram illustrating a display example of a determination result as abnormal and the like by the terminal device 7. A determination result display screen 71 has a graph display section 71a, an alert history display section 71b, an AI diagnosis history display section 71c, a processing value display section 71d and a data selection section 71e. The data selection section 71e accepts selection of data to be displayed. For example, the data selection section 71e accepts the operating date of the twin-screw kneading extruder 1, the type of statistics to be displayed and the selection of a diagnostic item. In the case where more than one twin-screw kneading extruders 1 are connected to the first network, the data selection section 71e may be configured to accept the selection of any of the twin-screw kneading extruders 1. The terminal device 7 transmits the operating date, identification information of the twin-screw kneading extruder 1 and the like that are selected by the data selection section 71e to the abnormality detection apparatus 3 and requests for the history of abnormality determination results, the statistics of sensor value data and the history of diagnostic results for the selected twin-screw kneading extruder 1 on the operating date. The terminal device 7 receives information transmitted from the diagnostic apparatus 5 in response to the request and displays the received information. The graph display section 71a graphically displays the variation with time of the statistics of the sensor value data. The alert history display section 71b displays the received history of the determination results indicating the presence or absence of an abnormality of the twin-screw kneading extruder 1. The AI diagnosis history display section 71c displays the history of the diagnostic results related to the abnormality or the life of the twin-screw kneading extruder 1. The processing value display section 71d displays the values of the received statistics.

<Working Effect of Molding Machine System According to First Embodiment>

The molding machine system according to the first embodiment as described above includes the control device 14 that performs operation control of the twin-screw kneading extruder 1, the abnormality detection apparatus 3 and the diagnostic apparatus 5, and the cooperative work of these apparatuses enables detection of an abnormality of the twin-screw kneading extruder 1 without imparting excessive load on the control device 14 and also enables diagnosis of detailed conditions of an abnormality, a life and the like of the twin-screw kneading extruder 1.

Furthermore, the abnormality detection apparatus 3 can easily detect an abnormality of the twin-screw kneading extruder 1 using the sensor value data and operating data and can transmit the determination result as abnormal to the control device 14. By merely transmitting the operating data to the abnormality detection apparatus 3, the control device 14 can receive the determination result as abnormal for the twin-screw kneading extruder 1 and can monitor the operation of the twin-screw kneading extruder 1 based on the determination result.

Moreover, the abnormality detection apparatus 3 can calculate the statistics of the sensor value data and transmit the statistics to the control device 14, to allow the control device 14 to display the graph of the statistics and the values of the statistics on the display.

Additionally, the abnormality detection apparatus 3 can detect abnormal vibrations of the gear reducer 13, overload on the screw shaft 11 and a dimensional abnormality of a molded product and transmit such abnormalities to the control device 14.

The diagnostic apparatus 5 can diagnose the abnormality and life of the twin-screw kneading extruder 1 in detail based on the current operating data and sensor value data of the twin-screw kneading extruder 1 and the past sensor value data accumulated in the database 6. The diagnostic apparatus 5 can diagnose the condition of the twin-screw kneading extruder 1 that cannot be conducted by the abnormality detection apparatus 3.

By transmitting the current operating data and sensor value data of the twin-screw kneading extruder 1 to the diagnostic apparatus 5 and requesting for the diagnosis, the abnormality detection apparatus 3 can obtain the diagnostic result and transmit the obtained diagnostic result to the control device 14. By merely transmitting the operating data to the abnormality detection apparatus 3, the control device 14 can receive the diagnostic result from the diagnostic apparatus 5 and display the diagnostic result on the display unit.

Furthermore, the diagnostic apparatus 5 can diagnose the condition such as an abnormality and life of the twin-screw kneading extruder 1 using the learning model 54.

Moreover, by constructing the learning model 54 with a one-class classification model, the learning model 54 can be machine-trained by using the time-series data image obtained when the twin-screw kneading extruder 1 operates in the normal condition without using the time-series data image of the twin-screw kneading extruder 1 in the abnormal condition.

Additionally, the sensor value data output from the multiple sensors 2 are represented by a sheet of time-series data image, and by calculating the feature of the time-series data image with the learning model 54, the feature precisely indicating the condition of the twin-screw kneading extruder 1 can easily be obtained. By using the feature thus obtained, the condition of the twin-screw kneading extruder 1 can be diagnosed with accuracy.

Moreover, though the first embodiment describes an example where the diagnostic apparatus 5 performs machine learning on the learning model 54, another external computer or a server may perform machine learning on the learning model 54.

In addition, though abnormality detection and diagnosis performed on the twin-screw kneading extruder 1 are mainly described in the first embodiment, abnormality detection and diagnosis may be performed on molding machines such as an injection molding machine, a film molding machine, other production devices or the like.

(Modified Example)

The diagnostic apparatus 5 may be configured to perform billing processing for the diagnostic processing using the leaning model 54. For example, depending on the number of twin-screw kneading extruders 1, the number of sensors 2, the types of the sensors 2, the data amount of a target for diagnosis, the number of learning models 54 to be used and the like, the diagnostic apparatus 5 may calculate the fee for diagnosis and may store, in the storage unit 52, the calculated fee for the diagnosis in association with the user ID of the abnormality diagnosis system, the identification ID of the twin-screw kneading extruder, the operating date, the data amount and the items for diagnosis.

(Second Embodiment)

The molding machine system according to a second embodiment is different from the first embodiment in that it accepts feedback from the user on the diagnostic result and updates the learning model 54 or diagnostic criterion. Since other configurations of the molding machine are similar to those in the first embodiment, the corresponding parts are designated by the same codes and detailed description thereof will not be made.

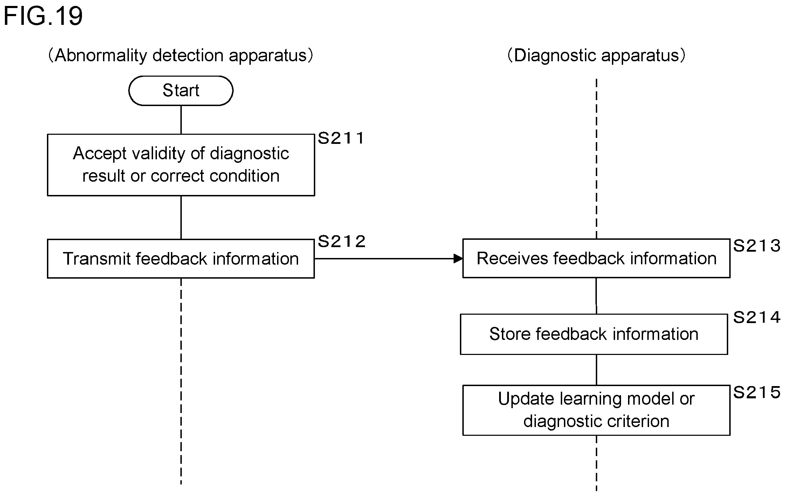

FIG. 19 is a flowchart illustrating a feedback processing procedure for a diagnostic result according to the second embodiment. The abnormality detection apparatus 3 accepts the validity of the diagnostic result or the correct condition of the twin-screw kneading extruder 1 via the control device 14 (step S211). The processing unit 31 of the abnormality detection apparatus 3 transmits, to the diagnostic apparatus 5, feedback information including the operating data and sensor value data from which the diagnostic results to be evaluated is obtained and the data indicating the correct condition of the twin-screw kneading extruder 1 (step S212).

The above-mentioned details of the feedback information are mere examples. In the case where the diagnostic ID, operating data, sensor value data and diagnostic result are stored in the database 6, for example, the abnormality detection apparatus 3 only have to transmit, to the diagnostic apparatus 5, the feedback information including the diagnostic ID applied to the received diagnostic result and the correct condition of the twin-screw kneading extruder 1. Furthermore, the abnormality detection apparatus 3 may be configured to transmit the feedback information including the diagnostic ID and the validity of the diagnostic result to the diagnostic apparatus 5.

The diagnostic apparatus 5 receives the feedback information transmitted from the abnormality detection apparatus 3 (step S213) and stores the received feedback information in the database 6 (step S214). In other words, it stores the operating data, the sensor value and the correct condition of the twin-screw kneading extruder 1. The diagnostic apparatus 5 additionally trains the learning model 54 or updates the diagnostic criterion, based on the feedback information (step S215).

For example, in the case where the diagnostic result determined as abnormal is incorrect and the twin-screw kneading extruder 1 is normal, the sensor value data for the incorrect diagnostic result is added to the normal training dataset as the data in the normal condition for use in the additional training of the learning model 54, which can improve the extraction accuracy of feature by the learning model 54.

In addition, it may be configured to change the threshold for diagnosing an abnormality of the twin-screw kneading extruder 1 based on the calculated score value. For example, in the case where the diagnostic result determined as abnormal is incorrect and the twin-screw kneading extruder 1 is normal, the diagnostic processing unit 51 increases the threshold. If the diagnostic result determined as normal is incorrect and the twin-screw kneading extruder 1 is abnormal, the diagnostic processing unit 51 reduces the threshold.

Changes to the learning model 54 and the diagnostic criterion may be made by receiving and accumulating multiple pieces of feedback information.

According to the molding machine system of the second embodiment, the diagnostic accuracy of the diagnostic apparatus 5 can be further improved by the feedback from the user.

(Third Embodiment)

A molding machine system according to a third embodiment is different from the first embodiment in that the operating data obtained from the field, sensor value data and data indicating the condition of the twin-screw kneading extruder 1 are accumulated in the database 6 so as to be used for additional training the learning model 54. Since the other configurations of the molding machine system are similar to the molding machine system in the first embodiment, the corresponding parts are designated by similar reference codes and detailed description thereof will not be made.

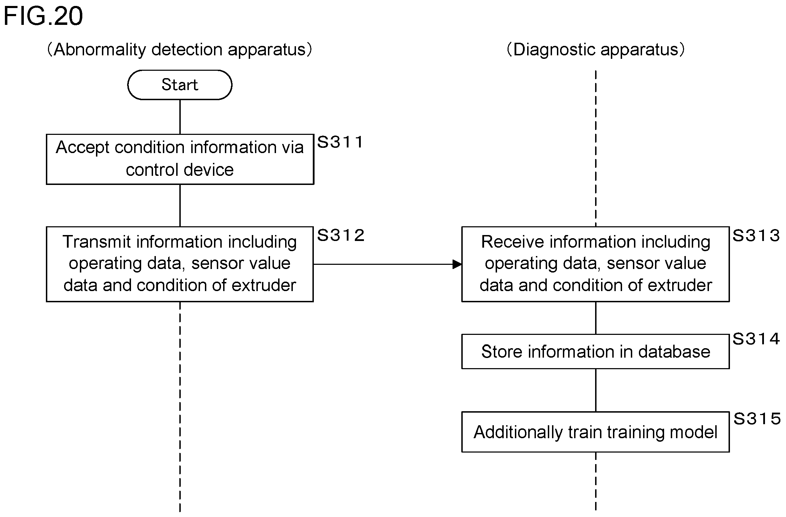

FIG. 20 is a flowchart illustrating a feedback processing procedure related to the condition of the twin-screw kneading extruder 1 according to the third embodiment. The abnormality detection apparatus 3 accepts the condition of the twin-screw kneading extruder 1 via the control device14 (step S311). In other words, the abnormality detection apparatus 3 accepts the current condition of the twin-screw kneading extruder 1 evaluated by the user. The processing unit 31 of the abnormality detection apparatus 3 then transmits information including the operating data, the sensor value data and the condition of the twin-screw kneading extruder 1 to the diagnostic apparatus 5 (step S312).

Moreover, the abnormality detection apparatus 3 may accept the information on the structure of the screw shaft 11 of the twin-screw kneading extruder 1, the type of resin raw materials, quality evaluation of a molded product, life expectancy and the like and may transmit the information to the diagnostic apparatus 5.

The diagnostic apparatus 5 receives the information including the operating data, the sensor value data, the condition of the twin-screw kneading extruder 1 and the other above-mentioned information transmitted from the abnormality detection apparatus 3 (step S313) and stores the received information in the database 6 (step S314). In other words, the diagnostic processing unit 51 stores the operating data, the sensor value data, the condition of the twin-screw kneading extruder 1 and the above-mentioned information. Then, the diagnostic apparatus 5 additionally trains the training model 54 using training datasets including the sensor value data based on the evaluations by the user accumulated in the database 6 (step S315).

According to the abnormality detection apparatus 3 of the third embodiment, the learning model 54 is additionally trained with the user's evaluations reflected, which can further improve the diagnostic accuracy by the diagnostic apparatus 5.

According to the information thus transmitted from the abnormality detection apparatus 3, data sets for supervised learning can be created. As described in the first embodiment, the diagnostic apparatus 5 is configured to generate or additionally train the learning model 54 that outputs the information related to the condition of the twin-screw kneading extruder 1 if receiving input of the sensor value data or the time-series data image using the data sets for the supervised training.

[Description of Reference Numerals]

| 1 | twin-screw kneading extruder |
|---|---|
| 2 | sensor |
| 3 | abnormality detection apparatus |
| 4 | router |
| 5 | diagnostic apparatus |
| 6 | database |
| 7 | terminal device |
| 10 | cylinder |
| 11 | screw shaft |
| 12 | motor |
| 13 | gear reducer |
| 14 | control device |
| 31 | processing unit |
| 33 | communication unit |
| 34 | acquisition unit |
| 51 | diagnostic processing unit |
| 53 | communication unit |
| 54 | learning model |
| 54a | neural network |
| P1, P2 | computer programs |

**Claims**

1. An abnormality detection system including an abnormality detection apparatus detecting an abnormality of a manufacturing device and a diagnostic apparatus diagnosing a condition of the production device, comprising:

   a control device that performs operation control of the manufacturing device and transmits operating data indicating a content of the operation control to the abnormality detection apparatus;
   a sensor that detects a physical quantity related to operation or a product of the manufacturing device and outputs time-series sensor value data indicating the physical quantity detected to the abnormality detection apparatus; and
   a database that accumulates information including the operating data, the sensor value data and a condition of the production device, wherein
   the abnormality detection apparatus includes

   a first communication unit that receives the operating data transmitted from the control device,
   an acquisition unit that acquires the sensor value data output from the sensor, and
   a processing unit that calculates statistics of the sensor value data acquired by the acquisition unit and determines a presence or an absence of an abnormality of the manufacturing device based on the statistics calculated and a threshold depending on the operating data received,

   the first communication unit transmits the operating data and the sensor value data to the diagnostic apparatus,
   the diagnostic apparatus includes

   a second communication unit that receives the operating data and the sensor value data that are transmitted from the abnormality detection apparatus, and

a diagnostic processing unit that diagnoses a condition of the manufacturing device based on the operating data and the sensor value data that are received by the second communication unit and information accumulated in the database,

the second communication unit transmits a diagnostic result from the diagnostic processing unit to the abnormality detection apparatus, and the first communication unit of the abnormality detection apparatus receives the diagnostic result from the diagnostic processing unit, and transmits a determination result from the processing unit, the statistics and the diagnostic result from the diagnostic processing unit to the control device.

2. The abnormality detection system according to claim 1, wherein

the condition of the manufacturing device accumulated in the database includes information on a life of the manufacturing device or a component of the manufacturing device and information on an abnormality of the manufacturing device or the component, and the diagnostic processing unit diagnoses a life or a presence or an absence of an abnormality of the manufacturing device or the component.

3. The abnormality detection system according to claim 1 or 2, wherein

the diagnostic apparatus has a learning model that outputs a feature of the manufacturing device or a product if the sensor value data is input, and the diagnostic processing unit diagnoses a condition of the manufacturing device by comparing a feature acquired by inputting the sensor value data received into the learning model and a feature acquired by inputting the sensor value data accumulated in the database to the learning model.

4. The abnormality detection system according to claim 3, wherein

the second communication unit receives feedback information indicating validity of the diagnostic result from the diagnostic processing unit or indicating a correct diagnostic result, and the diagnostic processing unit additionally trains the learning model based on the feedback information received or updates a diagnostic criterion based on the feature.

5. The abnormality detection system according to any one of claims 1 to 4, wherein

the first communication unit or the second communication unit receives information indicating a condition of the manufacturing device corresponding to the operating data and the sensor value data, and the abnormality detection apparatus or the diagnostic apparatus stores the condition received in the database in association with the operating data and the sensor value data.

6. A molding machine system comprising:

the abnormality detection system according to any one of claims 1 to 5; and a molding machine, wherein the abnormality detection system is configured to detect an abnormality of the molding machine.

7. An abnormality detection apparatus detecting an abnormality of a production device, comprising:

a communication unit that receives operating data that is transmitted from a control device performing operation control of the production device, the operating data indicating a content of the operation control; an acquisition unit that acquires time-series sensor value data output from a sensor detecting a physical quantity related to operation or a product of the production device; and a processing unit that calculates statistics of the sensor value data acquired by the acquisition unit and determines a presence or an absence of an abnormality of the manufacturing device based on the statistics calculated and a threshold depending on the operating data acquired, wherein the communication unit transmits the operating data and the sensor value data to an external diagnostic apparatus that diagnoses a condition of the production device, receives a diagnostic result transmitted from the diagnostic apparatus and transmits a determination result from the processing unit, the statistics and the diagnostic result received to the control device.

8. An abnormality detection method causing a computer to execute processing of detecting an abnormality of a production device, wherein the computer executes the processing of

receiving operating data that is transmitted from a control device performing operation control of the production device, the operating data indicating a content of the operation control; acquiring time-series sensor value data output from a sensor that detects a physical quantity related to operation or a product of the production device;

calculating statistics of the sensor value data acquired;

determining a presence or an absence of an abnormality of the manufacturing device based on the statistics calculated and a threshold depending on the operating data acquired;

transmitting the operating data and the sensor value data to an external diagnostic apparatus that diagnoses a condition of the production device; and

receiving a diagnostic result transmitted from the diagnostic apparatus and transmitting a determination result indicating a presence or an absence of an abnormality, the statistics and the diagnostic result received to the control device.

9. A computer program causing a computer to execute processing of detecting an abnormality of a production device, wherein the computer executes the processing of

receiving operating data that is transmitted from a control device that performs operation control of the production device, the operating data indicating a content of the operation control;

acquiring time-series sensor value data output from a sensor that detects a physical quantity related to operation or a product of the production device;

calculating statistics of the sensor value data acquired;

determining a presence or an absence of an abnormality of the manufacturing device based on the statistics calculated and a threshold depending on the operating data acquired;

transmitting the operating data and the sensor value data to an external diagnostic apparatus that diagnoses a condition of the production device; and

receiving a diagnostic result transmitted from the diagnostic apparatus and transmitting a determination result indicating a presence or an absence of an abnormality, the statistics and the diagnostic result received to the control device.

# FIG.1

EP 4 283 426 A1

FIG.2

**FIG.3**

Abnormality Detection Apparatus (3)

Storage Unit (32)
- Computer Program (P1)

Processing Unit (31)

Acquisition Unit (34)

Sensor (2)

Communication Unit (33)

Control Device (14)

Router (4)

Cloud

Diagnostic Apparatus (5)

(6)

(30)

EP 4 283 426 A1

FIG.4

Diagnostic Apparatus — 5

Abnormality Detection Apparatus — 3

6

7

Communication Unit — 53

Diagnostic Processing Unit — 51

Storage Unit — 52

Computer Program — P2

Learning Model — 54

50

EP 4 283 426 A1

FIG.5

| No. | Operating date | Operating data | Screw structure | Resin type | Sensor value | Condition | Quality evaluation | Life |
|-----|----------------|----------------|-----------------|------------|--------------|-----------|--------------------|------|

# FIG.6

（Control device）　　　　（Abnormality detection apparatus）　　　　（Diagnostic apparatus）

**Start**

| Control device | | Abnormality detection apparatus |
|---|---|---|
| Transmit various operating data | S11 → | Receive various operating data | S12 |

Acquire sensor value data | S13

Calculate statistics | S14

Abnormality determination processing | S15

Receive determination result and statistics | S17 ← | Transmit determination result and statistics | S16

Monitor processing | S18

Display determination result | S19 | Transmit sensor value data and the like | S20 → | Receive sensor value data and the like | S21

( 1 )

EP 4 283 426 A1

FIG.7

（Control device）　　　　　（Abnormality detection apparatus）　　　　　（Diagnostic apparatus）

Start

1

| Abnormality diagnostic processing | S22 |

| Life diagnostic processing | S23 |

| Receive diagnostic result | S25 |　　| Transmit diagnostic result | S24 |

| Receive diagnostic result | S27 |　　| Transmit diagnostic result | S26 |

| Display diagnostic result | S28 |

EP 4 283 426 A1

# FIG.8

Abnormality determination processing

Specify threshold of determination criterion based on operating data — S51

Determine presence or absence of abnormal vibrations of gear reducer — S52

Determine presence or absence of overload — S53

Determine presence or absence of a dimensional abnormality of molded product — S54

Determine presence or absence of strand abnormality — S55

Determine presence or absence of abnormality in resin viscosity — S56

Return

FIG.9

Abnormality diagnostic
processing

| Abnormality diagnosis of screw shaft | S61 |

| Diagnose performance degradation or oil abnormality vibrations of gear reducer | S62 |

| Diagnosis of inefficient operating condition | S63 |

| Diagnosis of operating condition causing quality abnormality | S64 |

Return

# FIG.10

```
        ╭─────────────────────╮
        │ Abnormality diagnosis │
        │   of screw shaft      │
        ╰─────────────────────╯
                  │
    ┌─────────────────────────────┐  S71
    │ Convert sensor value data into │
    │   time-series data images      │
    └─────────────────────────────┘
                  │
    ┌─────────────────────────────┐ S72
    │          Combination          │
    └─────────────────────────────┘
                  │
    ┌─────────────────────────────┐ S73
    │        Calculate feature      │
    └─────────────────────────────┘
                  │
    ┌─────────────────────────────┐ S74
    │   Read sensor value data when  │
    │ operating normally from database │
    └─────────────────────────────┘
                  │
    ┌─────────────────────────────┐ S75
    │ Convert sensor value data into │
    │   time-series data images      │
    └─────────────────────────────┘
                  │
    ┌─────────────────────────────┐ S76
    │          Combination          │
    └─────────────────────────────┘
                  │
    ┌─────────────────────────────┐ S77
    │        Calculate feature      │
    └─────────────────────────────┘
                  │
    ┌─────────────────────────────┐ S78
    │     Calculate outlier score    │
    └─────────────────────────────┘
                  │
    ┌─────────────────────────────┐ S79
    │ Diagnose presence or absence of │
    │          abnormality           │
    └─────────────────────────────┘
                  │
        ╭─────────────────────╮
        │        Return        │
        ╰─────────────────────╯
```

# FIG.11

First time-series
data image

Second time-series
data image

Combined time-series data image

FIG.12

Second
Feature

Normal

Abnormal

First
Feature

# FIG.13

```
     ┌─────────────────────┐
    ( │ Life diagnostic      │ )
    ( │ processing           │ )
     └─────────────────────┘
              │
 ┌────────────────────────────┐
 │ Convert sensor value data into │ S91
 │ time-series data images        │
 └────────────────────────────┘
              │
 ┌────────────────────────────┐
 │ Combination                 │ S92
 └────────────────────────────┘
              │
 ┌────────────────────────────┐
 │ Calculate feature           │ S93
 └────────────────────────────┘
              │
 ┌────────────────────────────┐
 │ Read specific sensor value data │ S94
 │ from database                │
 └────────────────────────────┘
              │
 ┌────────────────────────────┐
 │ Convert sensor value data into │ S95
 │ time-series data images        │
 └────────────────────────────┘
              │
 ┌────────────────────────────┐
 │ Combination                 │ S96
 └────────────────────────────┘
              │
 ┌────────────────────────────┐
 │ Calculate feature           │ S97
 └────────────────────────────┘
              │
 ┌────────────────────────────┐
 │ Calculate outlier score     │ S98
 └────────────────────────────┘
              │
 ┌────────────────────────────┐
 │ Diagnosis whether having normal │ S99
 │ life or not                  │
 └────────────────────────────┘
              │
       ┌──────────────┐
      ( │ Return        │ )
       └──────────────┘
```

# FIG.14

Training data sets (Reference images)

Reference images A — Label0

Reference images B — Label1

Reference images C — Label2

Learning Model  54

Training data sets
(Time-series data images at normal operation)

Second Feature

Label0   Label1

Label2

Normal

First Feature

FIG.15

First neural network

Back propagation machine learning

Training data sets (Reference images)

Input Layer → Feature Extraction Layer → Classification Layer ~54a

Descriptiveness loss

Take same weighting factors

Total Loss

Training data sets (Time-series data images at normal operation)

Input Layer → Feature Extraction Layer → Classification Layer ~54a

Compactness loss

Second neural network

Back propagation machine learning

EP 4 283 426 A1

FIG.16

Sample data
(Time-series data images
at normal operation)

Input layer

Feature
Extraction Layer

~54

Classification
Processing → Diagnosis
Result

Input layer

Feature
Extraction Layer

~54

Time-series data image
of a target for diagnosis

FIG.17

## FIG.18

71

71e — Data Selection Section

71a — Graph Display Section

Alert History Display Section — 71b

AI Diagnosis History Display Section — 71c

Processing Value Display Section — 71d

# FIG.19

（Abnormality detection apparatus）

Start

| Accept validity of diagnostic result or correct condition | S211 |

| Transmit feedback information | S212 |

（Diagnostic apparatus）

| Receives feedback information | S213 |

| Store feedback information | S214 |

| Update learning model or diagnostic criterion | S215 |

EP 4 283 426 A1

# FIG.20

EP 4 283 426 A1

（Abnormality detection apparatus）                    （Diagnostic apparatus）

```
                    (  Start  )

          ┌────────────────────────┐ S311
          │ Accept condition information via │
          │      control device          │
          └────────────────────────┘
```

```
 ┌────────────────────────┐ S312          ┌────────────────────────┐ S313
 │ Transmit information including │   ───▶  │ Receive information including │
 │ operating data, sensor value   │         │ operating data, sensor value  │
 │ data and condition of extruder │         │ data and condition of extruder│
 └────────────────────────┘                └────────────────────────┘

                                            ┌────────────────────────┐ S314
                                            │  Store information in database  │
                                            └────────────────────────┘

                                            ┌────────────────────────┐ S315
                                            │  Additionally train training model │
                                            └────────────────────────┘
```

## INTERNATIONAL SEARCH REPORT

| International application No. |
| --- |
| **PCT/JP2021/039607** |

| A. | CLASSIFICATION OF SUBJECT MATTER |
| --- | --- |

*G05B 23/02*(2006.01)i; *G01M 99/00*(2011.01)i
FI: G01M99/00 A; G05B23/02 302R; G05B23/02 302Z

According to International Patent Classification (IPC) or to both national classification and IPC

| B. | FIELDS SEARCHED |
| --- | --- |

Minimum documentation searched (classification system followed by classification symbols)

G05B23/02; G01M99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-80054 A (FANUC LTD) 28 May 2020 (2020-05-28)<br>entire text, all drawings | 1–9 |
| A | JP 2018-173333 A (SUMITOMO HEAVY INDUSTRIES) 08 November 2018 (2018-11-08)<br>entire text, all drawings | 1–9 |
| A | JP 2009-257806 A (NSK LTD) 05 November 2009 (2009-11-05)<br>entire text, all drawings | 1–9 |
| A | JP 5-157662 A (SUMITOMO HEAVY INDUSTRIES) 25 June 1993 (1993-06-25)<br>entire text, all drawings | 1–9 |
| A | JP 7-286892 A (TOSHIBA CORP) 31 October 1995 (1995-10-31)<br>entire text, all drawings | 1–9 |
| A | JP 7-248254 A (TOSHIBA CORP) 26 September 1995 (1995-09-26)<br>entire text, all drawings | 1–9 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 December 2021** | **14 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/039607**

| Patent document cited in search report | | | Publication date (day/month/year) | Patent family member(s) | Publication date (day/month/year) |
|---|---|---|---|---|---|
| JP | 2020-80054 | A | 28 May 2020 | US 2020/0151593 A1 entire text, all drawings | |
| JP | 2018-173333 | A | 08 November 2018 | (Family: none) | |
| JP | 2009-257806 | A | 05 November 2009 | (Family: none) | |
| JP | 5-157662 | A | 25 June 1993 | (Family: none) | |
| JP | 7-286892 | A | 31 October 1995 | (Family: none) | |
| JP | 7-248254 | A | 26 September 1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H550480 A